# EUROPÄISCHE PATENTANMELDUNG

(11) **EP 1 306 585 A2**
(43) Veröffentlichungstag der Anmeldung: **02.05.2003**
(21) Anmeldenummer: 01890339.3
(22) Anmeldetag: 17.12.2001
(51) Int. Cl.: F16J 3/06

(54) **Luftbalg**

(30) Priorität: 18.12.2000 AT 21012000
(71) Anmelder: Sidorenko, Vladimir, 4152 Sarleinsbach (AT)
(72) Erfinder: Sidorenko, Vladimir, 4152 Sarleinsbach (AT)

(57) **Zusammenfassung**

Der rechteckige Balg 3 vermeidet Aufgrund der geraden Biegelinie 7 Fig.4 und Fig.5 und nicht wie runder Balg mit kreisförmiger Biegelinie 1 Fig.4 bei der Herstellung die Entstehung von Falten 2 Fig.4 und macht die Verwendung von maximal reissfestem Förderbandgewebe, sowie die Herstellung eines extrem dünnen Balges möglich.

Dadurch daß der Balg aus flachen aufblasbaren Kuverten 10 Fig.6 besteht, ist er in leerem Zustand gleich dick wie andere Balgkons= truktionen A=B Fig.3 jedoch die Ausdehnung viel weiter C<D Fig3.

## Beschreibung

Schaffung eines neuartigen extrem dünnen Balges,zur Beseitigung örtlicher Einbeulungen an Karosserieblechen, welcher sich bei gleicher Dicke im Vergleich mit Bälgen anderer Konstruktionen in aufgeblasenem Zustand viel weiter ausdehnt.

### Anwendungsgebiet der Erfindung

Die Erfindung verwendet man zur Karosseriereparatur.

### Charakteristik des bekannten Standes der Technik

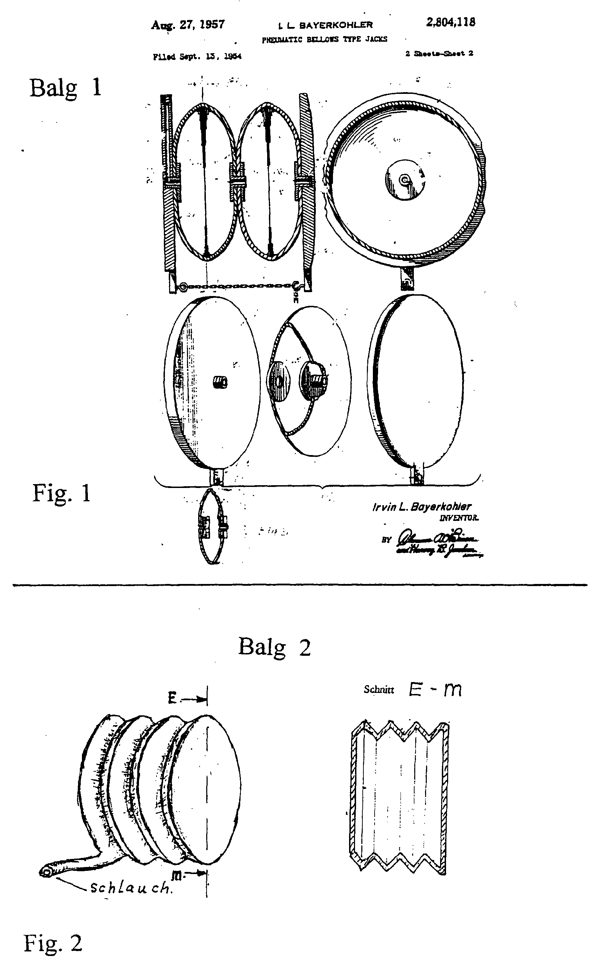

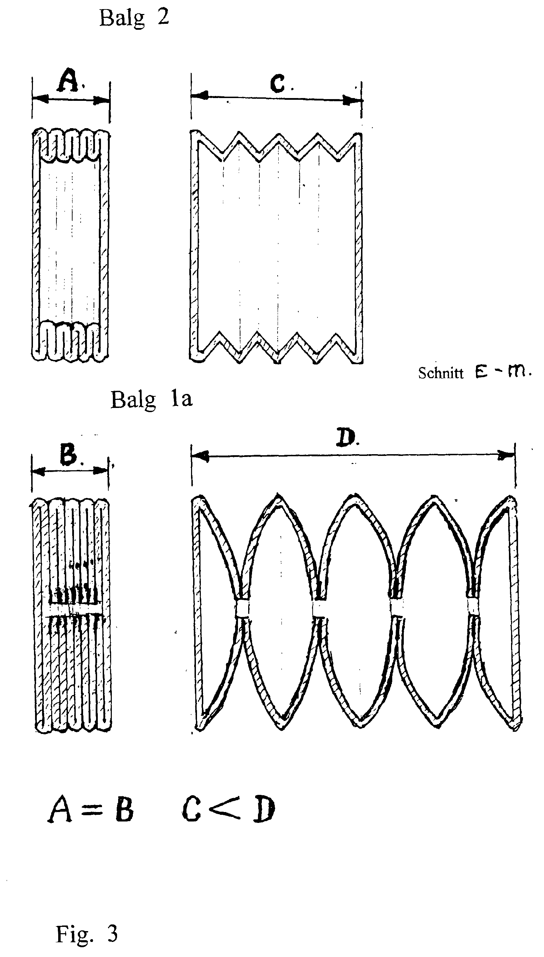

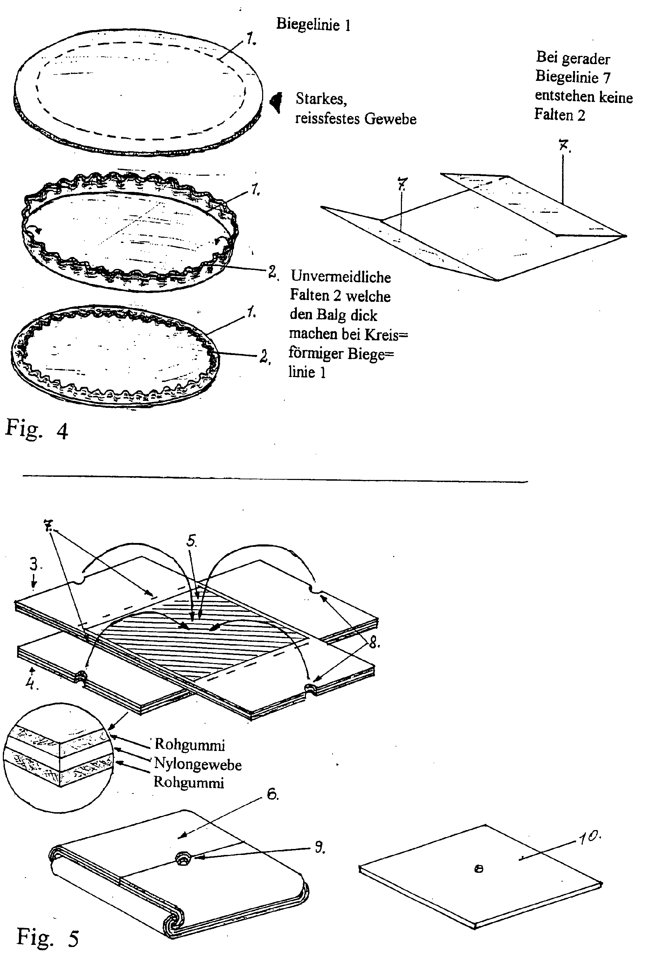

Neben den bekannten Verfahren zur Instandsetzung von be= schädigten Karosserieteilen durch Neuteilersetzung sind eine Reihe von Vorrichtungen und Verfahren entwickelt worden:
a; ausziehen der Delle durch ankleben von Schrauben
b; ausziehen der Delle durch Saugnapf
c; ausziehen der Delle durch anschweissen von Stiften oder Beilagen
Nachteil von Verfahren a und b ist das man Probleme beim Ausrichten von Kanten hat.
Nachteil von Verfahren c ist,das man durch anschweissen das Blech beschädigt.
Man kann Dellen auch von innen mit Hilfe mechanischer Winden oder Minidozzer oder hydraulischem Spreizgerät ausdrücken. Das Problem dieser Verfahren ist das einbringen in enge Hohlräume. Man kann Dellen auch ausdrücken durch Verwendung des Balges 1 Fig.1 US Patent 1957 oder Balg 2 Fig. 2 DDR Patent 1985. Nachteil von Balg-1 US Patent Fig. 1 welcher aus aufblasbaren Kissen in runder Form mit Kupplungsvorrichtung besteht, ist die große Dicke in leerem Zustand durch die vorhandene Kupplungsvorrichtung.Nachteil von Balg 2 Fig.2 DDR Patent, welcher aussieht wie ein Stück flexibler Staubsaugerschlauch, ist ebenfalls die große Dicke in leerem Zustand und die kurze Ausdehnung im Vergleich zu Balg 1a Fig.3.
Aufblasbare Kissen von Balg 1a Fig 3 sind nicht mit Kupplungen sondern mit kleiner Klebefläche verbunden.
Bei gleicher Dicke von Balg 1a und Balg 2 in leerem Zustand Fig 3 A=B ist Balg 1a, bestehend aus zusammengeklebten Kissen in auf= geblasenem Zustand wesentlich weiter ausgedehnt als Balg 2 Fig 3 C<D. Ein weiterer Nachteil von Balg 1 ist das es unmöglich ist ein starkes reissfestes Gewebe zu verwenden da bei der Herstellung des Balges durch die Kreisförmige Biegelinie 1 Fig4 unvermeidliche Falten 2 Fig4 entstehen wodurch der Balg wesentlich dicker wird. Aufgrund dieser Nachteile haben Balg 1 US Fig. 1 und Balg 2 DDR Fig 2 keine Verwendung in der Karosseriereparatur gefunden

### Zu lösende technische Aufgabe

Gegenstand der Erfindung ist die Herstellung eines Balges mit maximaler Reissfestigkeit, aus dem stärksten Material welches es gibt nämlich Förderbandgewebe.Er ist extrem dünn in leerem Zustand sowie mit großer Ausdehnung in aufgeblasenem Zustand. Zum reparieren von Blechteilen wie Türen, Seitenwand und der= gleichen anstatt diese zu erneuern, was mit hoher Umweltbelastung verbunden ist.

### Darstellung der Erfindung

Erfindungsgemäß sieht der Balg aus wie ein Paket rechteckige aufblasbare Kuverte welche in Zentrum miteinander auf kleiner Fläche verklebt sind mit zentrischem Loch zur Verbindung der einzelnen Kammern. Ein Kuvert weist einen Schlauchanschluß auf.

### Vorteilhafte Wirkungen der Erfindung

Erfindungsgemäß liegen die Vorteile in der rechteckigen Bauform, bestehend aus einzelnen aufblasbaren Kuverten. Aufgrund der geraden Biegelinie 7 Fig.4 und Fig.5 bei der Herstellung der ein= zelnen Kuverte entstehen keine Falten Fig.5 und es tauchen eben= falls keine Falten 2 Fig.4 auf welche den Balg unnötig dick machen. Daher kann man ein starkes, reissfestes Gewebematerial verwenden. Dieses Material kann bei den Erzeugnissen von Balg 1 Fig.1 und Balg 2 Fig.2 unmöglich verwendet werden.
Aufgrund der Verwendung von starkem reissfesten Gewebe ist der Balg sehr hart, was eine rasche Volumensänderung ermöglicht wodurch der Balg schnell verschoben werden kann. Dadurch daß der Balg aus extrem dünnen zusammengeklebten Kuverten besteht ist seine Ausdehnung viel größer im Vergleich zu anderen Konstruktionen C<D Fig.3 obwohl er im leeren Zustand gleich dick wie andere Balg Konstruktionen ist A=B Fig.3.

### Bezeichnung wenigstens eines Weges zur Ausführung der Erfindung unter Bezugnahme auf die Zeichnungen

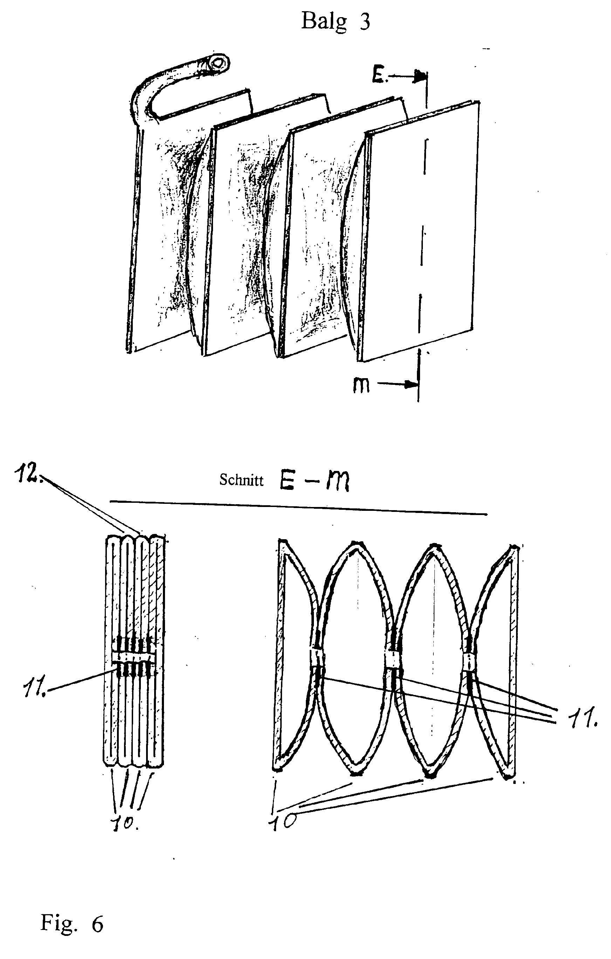

Zur Erzeugung von rechteckigen aufblasbaren Kuverten woraus der Balg besteht verwendet man zwei rechteckige Platten 3 und 4 Fig.5 mit halbrundem Ausschnitt auf der jeweils kürzeren Seite 8 Fig.5. Die Platte besteht aus drei Schichten: Rohgummi-Gewebe-Rohgummi Fig.5. Zwei Platten 3 u.4 kreuzweise übereinander legen und in der Mitte Trennplatte 5 (z.B.Papier) beilegen. Gegen= überliegende Viertel Teilstücke (3 u.4) auf Trennmittel 5 einschlagen.
Daraus entstehendes Kuvert 6 Fig.5 wird in der Vulkanisations= maschine zusammenvulkanisiert. Aufgrund der geraden Biegelinie 7 Fig.4 und Fig.5 entstehen keine Falten. Kuvert 10 Fig.5 wird extrem dünn mit Loch 9 im Zentrum aufgrund der halbrunden Ausschnitte 8 Jede Seite eines Kuverts 10 Fig.5 besteht nach der Vulkanisation aus einer doppelten Schicht Gewebe über die ganze Fläche,wodurch der Balg sehr widerstandsfähig gegen mögliche Beschädigungen ist. Aufgrund der doppelten Gewebeschicht ist der Balg sofort nach ab= lassen des Arbeitsmediums bestrebt in die flache Ausgangslage zu= rückzukehren.Eine beliebige Anzahl Kuverte 10 Fig.6 wird in der Mitte auf kleiner Fläche miteinander verklebt 11 Fig.6 wobei vorher die dazwischen liegenden Kuverte 12 Fig.6 in der Mitte durchge= bohrt werden zum durchströmen des Arbeitsmediums. In einem Kuvert ist zusätzlich ein Schlauchanschluss vorhanden.

## Patentansprüche

1. Der Balg, **dadurch gekennzeichnet daß** er eine rechteckige Form hat Balg 3 Fig.6,schließt bei der Fertigung das entstehen von Falten 2 Fig.4 aus,welche unvermeidlich entstehen bei der Herstellung von Balg mit runder Form Fig.4, was die Verwendung vom stärksten reissfesten Material (Förderbandgewebe) möglich macht,wodurch der Balg ein Maximum an Widerstandsfähigkeit bietet da er beid= seitig aus doppeltem Gewebe auf der gesamten Fläche besteht.

2. Der Balg,**dadurch gekennzeichnet daß** er eine rechteckige Form hat gemäß Anspruch 1,läßt bei der Herstellung keinerlei Falten 2 Fig.4 entstehen wodurch ein extrem dünner Balg entsteht.

3. Der Balg,**dadurch gekennzeichnet daß** er eine rechteckige Form hat gemäß Anspruch 1, wird durch die Verwendung einer doppelten Gewebeschicht auf jeder Seite über die gesamte Fläche sehr wider= standsfähig gegenüber möglichen mechanischen Beschädigungen.

4. Der Balg,**dadurch gekennzeichnet daß** er eine rechteckige Form hat gemäß Anspruch 1,wird durch die Verwendung einer doppelten Gewebeschicht auf jeder Seite über die gesamte Fläche dauerhaft fest mit starker Federwirkung,und kehrt beim ablassen des Arbeits= mediums sofort in die flache Ausgangsstellung zurück, was ein rasches Verschieben möglich macht.

5. Der Balg,**dadurch gekennzeichnet daß** er eine rechteckige Form hat, besteht aus zusammengeklebten aufblasbaren Kuverten 10 Fig.6 mit kleiner Klebefläche 11 Fig.6,der bei gleicher Dicke in leerem Zustand Fig.3 A=B eine wesentlich größere Ausdehnung in aufge= blasenem Zustand als vergleichbare Balgkonstruktionen bietet, C<D Fig.3.
